# EUROPEAN PATENT APPLICATION

(11) **EP 4 682 695 A1**
(43) Date of publication of application: **21.01.2026**
(21) Application number: 24853014.9
(22) Date of filing: 30.05.2024
(51) Int. Cl.: G06F 3/0484, G06F 9/451, G06F 3/0482

(54) **COMPUTER-IMPLEMENTED METHOD AND ELECTRONIC DEVICE**

(71) Applicant: Beijing Zitiao Network Technology Co., Ltd., Beijing 100190 (CN)
(72) Inventor: QI, Junyuan, Beijing 100028 (CN); ZHONG, Xin, Beijing 100028 (CN)
(74) Representative: Marks & Clerk LLP
(86) International application number: PCT/CN2024/096455
(87) International publication number: WO 2025/245799

(57) **Abstract**

Embodiments of the present disclosure provide a computer-implemented method and an electronic device. The method includes: in a case where a desktop or an interface of a running application is displayed, presenting, in response to a wake-up operation from a user, an interface of a launcher for interacting with the user, where the interface of the launcher includes an input box and a plurality of generative functions. The method further includes: generating, based on an input from the user in the input box, an output corresponding to the input. Based on this, the launcher for interacting with the user can be quickly invoked and then presented during display of any interface on a computer. Therefore, a user operation can be facilitated, and a processing speed for implementing the generative function can be increased.

## Description

### FIELD

Embodiments of the present disclosure primarily relate to the field of computers, and more particularly, to a computer-implemented method and an electronic device.

### BACKGROUND

With the development of large language model (LLM) technology, a variety of models accessible to users have been proposed. For example, a user can ask questions and receive answers. Current large language models typically require users to separately access specific artificial intelligence (AI) dialogue software, resulting in relatively cumbersome operations for the users. Moreover, the existing specific AI dialogue software is independent of the operating system and has relatively limited functions.

### SUMMARY

Embodiments of the present disclosure provide a solution that is based on a large language model and combined with an operating system, to enable a user to quickly wake up an interface of a launcher, facilitating human-computer interaction and improving user experience.

According to a first aspect of the present disclosure, there is provided a computer-implemented method. The method includes: in a case where a desktop or an interface of a running application is displayed, presenting, in response to a wake-up operation from a user, an interface of a launcher for interacting with the user, where the interface of the launcher includes an input box and a plurality of generative functions; and generating, based on an input from the user in the input box, an output corresponding to the input.

According to a second aspect of the present disclosure, there is provided an electronic device. The electronic device includes: at least one processing unit; and at least one memory coupled to the at least one processing unit and storing instructions executable by the at least one processing unit, where the instructions, when executed by the at least one processing unit, cause the electronic device to perform actions including: in a case where a desktop or an interface of a running application is displayed, presenting, in response to a wake-up operation from a user, an interface of a launcher for interacting with the user, where the interface of the launcher includes an input box and a plurality of generative functions; and generating, based on an input from the user in the input box, an output corresponding to the input.

According to a third aspect of the present disclosure, there is provided an apparatus. The apparatus includes: a presenting module configured to: in a case where a desktop or an interface of a running application is displayed, present, in response to a wake-up operation from a user, an interface of a launcher for interacting with the user, where the interface of the launcher includes an input box and a plurality of generative functions; and a generation module configured to generate, based on an input from the user in the input box, an output corresponding to the input.

According to a fourth aspect of the present disclosure, there is provided a computer-readable storage medium having machine-executable instructions stored thereon, where the machine-executable instructions, when executed by a device, cause the device to perform the method as described in the first aspect of the present disclosure.

According to a fifth aspect of the present disclosure, there is provided a computer program product including computer-executable instructions, where the computer-executable instructions, when executed by a processor, cause the method as described in the first aspect of the present disclosure to be implemented.

According to a sixth aspect of the present disclosure, there is provided an electronic device. The electronic device includes a processing circuit configured to perform the method as described in the first aspect of the present disclosure.

The section Summary is provided to describe a series of concepts in a simplified form, which will be further described in the detailed description below. The section Summary is neither intended to identify critical or essential features of the present disclosure, nor is it intended to limit the scope of the present disclosure. Other features of the present disclosure will be readily understood from the following description.

### BRIEF DESCRIPTION OF THE DRAWINGS

The foregoing and other features, advantages, and aspects of embodiments of the present disclosure become more apparent with reference to the following detailed descriptions and in conjunction with the accompanying drawings. Throughout the accompanying drawings, the same or similar reference numerals denote the same or similar elements, in which:
FIG. 1 is a schematic flowchart of a computer-implemented method according to some embodiments of the present disclosure;
FIG. 2 is a schematic diagram of an interface of an invoked launcher according to some embodiments of the present disclosure;
FIGs. 3A-3C are schematic diagrams of an interface associated with AI search according to some embodiments of the present disclosure;
FIG. 4 is a schematic diagram of an interface associated with translation according to some embodiments of the present disclosure;
FIGs. 5A-5C are schematic diagrams of an interface associated with file upload according to some embodiments of the present disclosure;
FIGs. 6A-6C are schematic diagrams of an interface associated with a local query according to some embodiments of the present disclosure;
FIG. 7 is a schematic diagram of a first output according to some embodiments of the present disclosure;
FIG. 8 is a block diagram of an example apparatus according to some embodiments of the present disclosure; and
FIG. 9 is a block diagram of an example electronic device that can be used to implement an embodiment of the present disclosure.

### DETAILED DESCRIPTION OF EMBODIMENTS

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

In the descriptions of the embodiments of the present disclosure, the term "include" and similar terms should be understood as an open-ended inclusion, namely, "including but not limited to". The term "based on" should be understood as "at least partially based on". The term "an embodiment" or "the embodiment" should be understood as "at least one embodiment". The terms "first", "second", and the like may refer to different objects or the same object. The term "and/or" refers to at least one of two associated items. For example, "A and/or B" indicates A, B, or A and B. Other explicit and implicit definitions may be included below.

The embodiments of the present disclosure involve the term "large language model", which is capable of understanding and generating a general language. It should be noted that the use of this term is merely illustrative and is not intended to limit the embodiments of the present disclosure. In some scenarios, the term "large language model" may also be replaced by any one or a combination of the following: a network model, a neural network model, a neural network, a machine learning (ML) model, a deep learning (DL) model, a deep network, a generative AI model, etc., which is not limited in the present disclosure.

A large language model can be obtained through a computationally intensive self-supervised and semi-supervised training process. In some examples, the large language model may be based on a transformer architecture. In some examples, the large language model may include an encoder and a decoder, or only a decoder.

With the technological development and widespread application of large language models, users may expect more convenience in asking questions and receiving answers. However, existing AI dialogue software is relatively independent and requires users to use it separately, which is not convenient enough.

In view of this, embodiments of the present disclosure provide a solution based on the large language model technology. In this solution, in a case where a desktop or an interface of a running application is displayed, an interface of a launcher for interacting with a user is presented in response to a wake-up operation from the user, where the interface of the launcher includes an input box and a plurality of generative functions. Then, based on an input from the user in the input box, an output corresponding to the input is generated. Based on this, the launcher for interacting with the user can be quickly invoked and then presented during display of any interface on a computer. Therefore, a user operation can be facilitated, and a processing speed for implementing the generative function can be increased. In some examples, the launcher can be combined with an operating system and a search engine, so that the user does not need to determine a location of a query in advance, saving time and effort of the user for predetermining, and improving user experience.

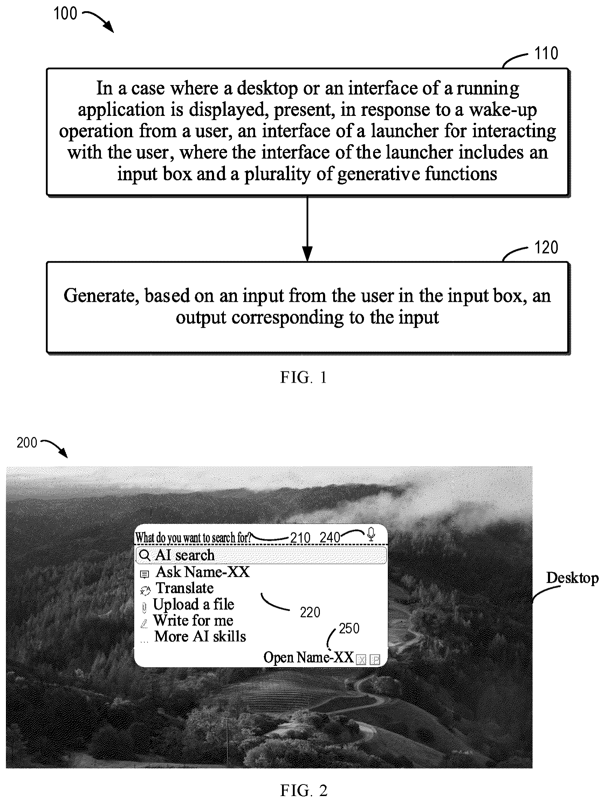

FIG. 1 is a schematic flowchart of a computer-implemented method 100 according to some embodiments of the present disclosure. The method shown in FIG. 1 may be performed by an electronic device. For example, the electronic device is a computer. At block 110, in a case where a desktop or an interface of a running application is displayed, the electronic device presents, in response to a wake-up operation from a user, an interface of a launcher for interacting with the user, where the interface of the launcher includes an input box and a plurality of generative functions. At block 120, the electronic device generates, based on an input from the user in the input box, an output corresponding to the input.

An operating system and a plurality of applications are installed on the electronic device, where the plurality of applications may include a specific desktop application associated with the launcher. By way of example, the specific desktop application is implemented as a dedicated browser application, a specific plug-in in at least one search engine, or a specific web page. It should be understood that a name of the specific desktop application is not limited in the embodiments of the present disclosure. For ease of description, an example in which the name of the specific desktop application is "Name-XX" is used as for description below.

It should be understood that the term "launcher" is used herein to denote dialogue software for interacting with the user to provide an answer or content desired by the user, a name the software is merely an example and should not be construed as a limitation on the embodiments of the present disclosure. In some cases, the launcher may call another application to provide the answer or content desired by the user, to meet a generation requirement, a reading requirement, etc. of the user. By way of example, the launcher may be a generative AI dialogue interaction window that is combined with the operating system and/or search engine and that uses an LLM technology.

It should be understood that the term "wake-up" is used herein to denote presentation of the interface of the launcher, e.g., presentation of the interface of the launcher at a top layer of interfaces. The term is merely an example. For example, terms such as "invoke" and "trigger" are also used below to denote the same meaning.

When using the electronic device, the user may expect to learn answers to some questions, or may expect a query for some information or content. When using the electronic device by the user, the user can perform the wake-up operation any time, so that the electronic device presents the interface of the launcher. In some embodiments, the wake-up operation may be a preset or predefined operation for invoking the launcher, as described below with reference to detailed examples.

In some examples, in the case where the electronic device displays the desktop of the operating system, the user may invoke the interface of the launcher through the wake-up operation. In some examples, in the case where the electronic device displays a running interface of any application, the user may invoke the interface of the launcher through the wake-up operation. In some examples, the invoked interface of the launcher may be presented in the form of a floating window. In some examples, the presented interface of the launcher is not displayed in full screen. For example, the presented interface of the launcher may have a predetermined size, and the size of the interface of the launcher may be further adjusted based on an adjustment instruction of the user. The predetermined size is not specifically limited in the embodiments of the present disclosure, which, for example, may be 1/9 of an entire display screen, may be determined based on a size of a displayed font, or may be another size. It may be understood that before the interface of the launcher is invoked, the electronic device may display a running interface of any application running on the operating system. The application here may be an application built in the operating system, a user-installed application, etc. For example, if the user wants to learn answers to some questions while editing a Word document, the user invokes the interface of the launcher through the wake-up operation when a running interface of the Word document is displayed. For another example, if the user wants to learn answers to some questions while performing Java programming, the user invokes the interface of the launcher through the wake-up operation when a running interface of JavaScript is displayed. It should be understood that only some examples are given here, and other scenarios are also applicable, which are not listed here.

By way of example, the user may trigger a shortcut key associated with the launcher, to invoke the interface of the launcher. For example, the user may simultaneously press a group of keys on a keyboard. For example, the shortcut key may be a shortcut key set by default in the application, or may be a shortcut key customized by the user (such as Fn+Shift+O, or others). For example, the user may set the shortcut key on a setting page of the specific desktop application.

By way of example, the electronic device may be provided with a voice collection apparatus (such as a microphone), and the user may input voice for invoking the launcher, to invoke the interface of the launcher. For example, the user may speak the voice in a preset language. For example, the voice for invoking the launcher may be voice set by default in the application, or may be voice customized by the user (such as "Open the launcher", or "Pop up the launcher", or others).

By way of example, the electronic device may be provided with an image collection apparatus (such as a camera), and the user may make a specific gesture for invoking the launcher, to invoke the interface of the launcher. For example, the gesture may be a static gesture or a dynamic gesture. For example, the specific gesture for invoking the launcher may be a gesture set by default in the application, or may be a gesture customized by the user (for example, both hands make an OK gesture, only one hand makes an OK gesture and traces out a circle in a predetermined period of time, or others).

By way of example, the user can click, e.g., right-click, on the desktop of the operating system, and then select a specific option to invoke the interface of the launcher. For example, the specific option may be "Open the launcher", "Pop up the launcher", or other similar content.

By way of example, a shortcut button for invoking the launcher may be presented on the desktop of the operating system or at a specific location (such as a toolbar or a taskbar) associated with the desktop, and the user may select, click on, double-click on, or touch and hold the shortcut button to invoke the launcher.

By way of example, a shortcut button for invoking the launcher may be presented on the running interface of the application that is being displayed, and the user may select, click on, double-click on, or touch and hold the shortcut button to invoke the launcher. For example, the shortcut button may be set to be displayed on a custom ribbon of the Word document.

It may be understood that some examples of the wake-up operation are provided above, but the embodiments of the present disclosure are not limited thereto. The wake-up operation may alternatively be implemented by using other settings or definitions. For example, the launcher is displayed as a floating window after minimized, and the user may double-click on, touch and hold, or click on a restore button, etc., to present the interface of the launcher in the predetermined size.

FIG. 2 is a schematic diagram of an interface 200 of an invoked launcher according to some embodiments of the present disclosure. For example, in the case where the desktop of the operating system is displayed, the interface 200 of the launcher may be presented based on the wake-up operation of the user. Optionally, the interface 200 of the launcher may be understood as an initial interface of the launcher, etc. As shown in FIG. 2, the interface 200 of the launcher includes an input box 210 and a plurality of generative functions 220.

As illustrated, prompt information may be displayed in the input box 210. For example, "What do you want to search for?" is displayed in the form of a placeholder. Optionally, the user may input, e.g., a text in the input box 210. For example, a voice input button 240 may also be displayed in the interface 200, e.g., may be displayed in association with the input box 210. By way of example, the user may click on the voice input button 240 and then input the voice. By way of example, the user may enter a specific key in the input box 210, to enable voice input. For example, the specific key may be a space key.

For example, the user may select (e.g., touch and hold) the voice input button 240 to enter a voice input mode. For example, a voice input window corresponding to the voice input mode may be displayed. For example, the voice input window may include a close button (such as ×) for closing the voice output window. For example, a divider may be displayed when the user inputs the voice, where the divider may be a dynamic animation of voice in a dialogue. For example, when the voice input by the user is obtained, the voice may be converted into a text in real time, and then the text may be displayed, for example, in the input box 210. For example, after the voice input is completed (e.g., the user touches and holds the voice input button 240 and then releases it), a cancel or exit button may be displayed to delete the input that has been converted into the text, so that the user can input voice again.

Optionally, as shown in the figure, link information 250 may be displayed in the interface 200 of the launcher, to start the specific desktop application. For example, the link information 250 is a shortcut key for the user to open a main window of the specific desktop application.

The plurality of generative functions 220 are displayed in the interface 200 of the launcher. In some examples, a predetermined number of generative functions may be displayed in the interface 200, such as five generative functions shown in FIG. 2, including: "AI search", "Ask Name-XX", "Translate", "Upload a file", and "Write for me". More other functions are collapsed, for example, "More AI skills" shown in FIG. 2. For example, other generative functions may be expanded in response to an operation of the user on "More AI skills", such as a click.

In some examples, more than a predetermined number of generative functions may be displayed in the interface 200 of the launcher, or more than a predetermined number of generative functions may be displayed based on an operation of the user on "More AI skills". For example, these generative functions may be displayed in a scrolling manner, for example, a scrollbar is displayed on the left or right, and the user may view, through scrolling, the generative functions that cannot be displayed. It may be understood that the term "generative function" in the embodiments of the present disclosure is merely an example, and may be replaced by other names such as AI skill or generative skill., which is not limited herein.

In the embodiments of the present disclosure, the plurality of generative functions may include some or all of the following: AI search, asking Name-XX, translation, file upload, writing for me, rewriting, writing expansion, grammar correction, writing improvement, link summarization, script rewriting, image generation, music generation, weekly report generation, OKR generation, line-by-line interpretation of code, code error correction, reading of a code error, brainstorming, task item extraction, summarization of advantages and disadvantages, keyword extraction, prompt optimization, search term optimization, etc. Optionally, the plurality of generative functions may further include summarizing or comprehending a document, music, a video, etc., to help the user ask a question about the document, the music, the video, etc. Optionally, the plurality of generative functions and a display order of which may be set by default in the application, for example, may be preset in a certain module of the application.

In some implementations, a trigger operation of the user for a specific function (which is referred to as a first function for ease of description) among the plurality of generative functions may be obtained. For example, the user may select and/or click on the first function. In some implementations, an interface associated with the first function may be presented based on the trigger operation. For example, the interface associated with the first function may include the input box and prompt information associated with the first function.

In some embodiments, input information from the user may be obtained in the interface associated with the first function, and then an output corresponding to the input information may be generated by using the first function and presented. It may be understood that content, a format, etc. of the output depend on the input information from the user and the first function selected by the user.

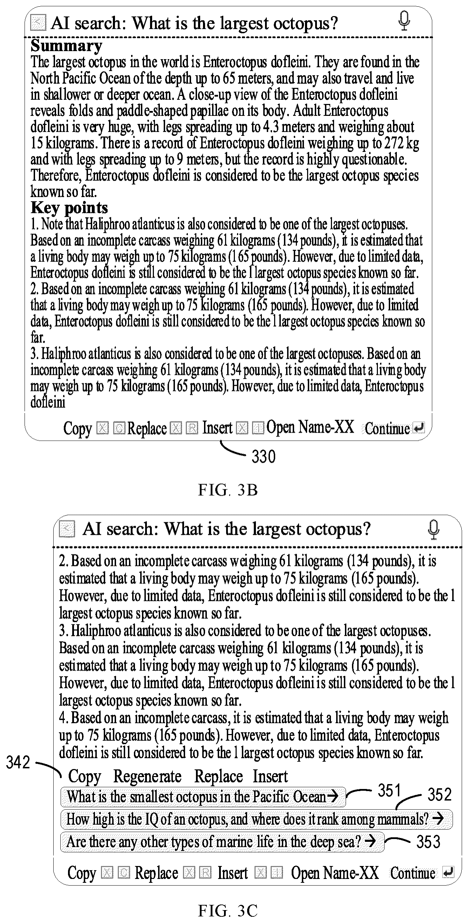

As an example, the output may be presented in the interface of the launcher. By way of example, if the first function is a generative function such as AI search, rewriting, writing expansion, or grammar correction, the output may be directly displayed in the interface of the launcher. For example, the output may be displayed in another area associated with the input box, such as an interaction interface (e.g., below the input box), for example, as shown in FIG. 3B or 3C below.

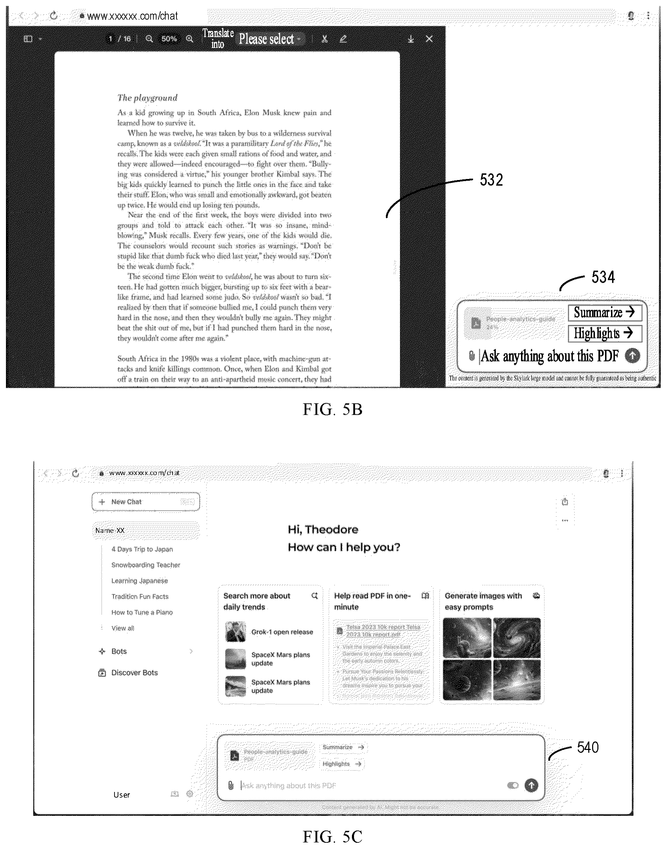

As another example, an interface of the specific desktop application (e.g., Name-XX) may be presented, and the output may be presented in the interface of the specific desktop application (e.g., Name-XX). By way of example, if the first function is a generative function such as file upload, music generation, or summarization of a document or video, the output may be presented in the interface of the specific desktop application. For example, the interface of the specific desktop application may be called and opened, and then the output may be displayed in the opened interface, for example, as shown in FIG. 5B or 5C below. It may be understood that in the case where the interface of the specific desktop application is displayed, the interface of the launcher may be presented again based on the wake-up operation of the user.

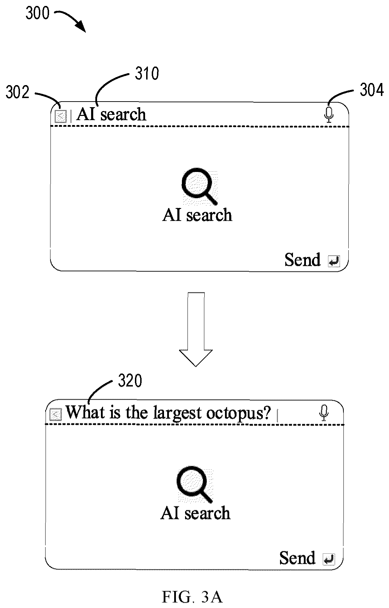

Some examples of generating and presenting the output after the user selects the first function are described below with reference to FIG. 3A to FIG. 5C.

FIG. 3A is a schematic diagram of an interface 300 associated with AI search. For example, the user may click on the first function (i.e., "AI search") in the interface 200 shown in FIG. 2, to enter the interface 300 associated with the first function (i.e., "AI search").

As shown in FIG. 3A, the interface 300 includes an input box 310. Optionally, the prompt information associated with the first function may be displayed in the input box 310. By way of example, the prompt information may be a name of the first function. For example, "AI search" may be displayed as a placeholder in the input box 310.

For example, a back button may be displayed at a location associated with the input box 310. For example, a back button 302 is displayed on the left of the input box 310. By way of example, the electronic device may go back to the interface of the launcher (such as the interface 200 shown in FIG. 2) in response to an operation (such as a click) of the user on the back button 302. For example, a voice input button 304 may be further displayed in the interface 300, which is similar to the voice input button 240 described wieh reference to FIG. 2, and details are not described herein again.

As shown the figure, a "Send" button is further displayed, for example, in a lower right corner of the interface 300. For example, the "Send" button may be disabled in a case where there is no input information entered by the user in the input box 310. For example, the "Send" button is enabled in a case where there is the input information from the user in the input box 310. As an example, it is assumed that the input information from the user in the input box 310 is "What is the largest octopus?" 320. Thereafter, an answer (i.e., the output) to the input information from the user may be displayed based on a further confirmation operation of the user, as shown in FIG. 3B or 3C. For example, the confirmation operation may be the user pressing an enter key, the user clicking on the "Send" button, the user inputting voice for confirmation, etc., which is not limited in the present disclosure.

FIG. 3B shows an embodiment of an output displayed for the input information 320. For example, the output may be displayed in the interface of the launcher. For example, one or more operation buttons may be further associatively displayed at a predetermined location. As shown in FIG. 3B, operation buttons 330 may be displayed at the bottom, including "Copy", "Replace", "Insert", etc. "Insert" in the operation buttons 330 may be used to insert a generated output into a window of an application running before the launcher is invoked. For example, if the launcher is invoked during display of the running interface of the Word document, the generated output may be directly added to the Word document through "Insert", which can free the user from copy and paste operations for adding content to the Word document, achieving more convenience and high efficiency. For example, link information may be further displayed, such as "Open Name-XX for more operations" displayed in the lower right corner. For example, the user may trigger the link information to display the interface of the specific desktop application (such as Name-XX), to facilitate a subsequent operation of the user. It should be noted that the several operations in the operation buttons 330 are merely illustrative, for example, more or fewer operations may be included in an actual scenario. For example, a cancel button may be included, and the user may trigger the cancel button, to go back to the interface shown in the upper or lower part of FIG. 3A.

For example, the input information in the input box may be further edited to modify the previous input. During the editing process, the operation buttons 330 and the link information may no longer be displayed, while the "Send" button shown in the lower right corner in FIG. 3A may be displayed.

FIG. 3C shows another embodiment of the output displayed for the input information 320. For example, the output may be displayed in the interface of the launcher. For example, similar to that in FIG. 3B, one or more operation buttons and link information may be associatively displayed at a predetermined location (such as the bottom). As shown in FIG. 3B, an operation button may alternatively be displayed at another location in the interface. For example, at least one operation button 342 is displayed near the middle.

For example, one or more extended questions may be further displayed. As illustrated, a plurality of extended questions 351 to 353 are displayed below the at least one operation button 342. In this way, if interested in these extended questions, the user can get answers by triggering the extended questions, reducing time and processes of inputting the extended questions, and improving the user experience.

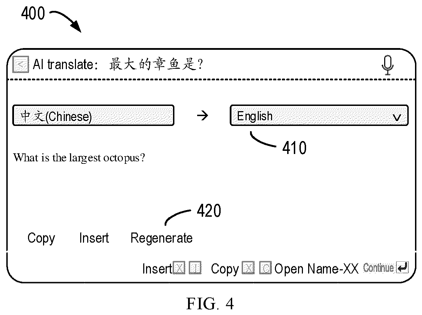

FIG. 4 is a schematic diagram of an interface 400 associated with translation. For example, the user may click on the first function (i.e., "Translate") in the interface 200 shown in FIG. 2, to enter the interface 400 associated with the first function (i.e., "Translate").

For example, an input box may be displayed in the interface associated with translation. Optionally, the prompt information (such as the name "Translate" of the first function) associated with the first function is displayed in the form of a placeholder in the input box. For example, a back button may be displayed at a location associated with the input box. For example, the back button is displayed on the left of the input box. By way of example, the electronic device may go back to the interface of the launcher (such as the interface 200 shown in FIG. 2) in response to an operation (such as a click) of the user on the back button. For example, a voice input button may be further displayed in the interface, which is similar to the voice input button 240 described with reference to FIG. 2, and details are not described herein again.

For example, an original language and a target language may be displayed in the interface associated with translation. For example, the original language may be automatically recognized based on an input of the user in the input box, or the original language may be updated or determined based on selection of the user. For example, the target language may be determined based on an operation (such as selecting a specific language) of the user at a target language box 410. For example, an output, that is, a translation in the target language, corresponding to the input may be generated.

For example, one or more operation buttons may be further associatively displayed at a predetermined location. As shown in FIG. 4, operation buttons 420 may be displayed, including "Copy", "Insert", "Regenerate", etc.

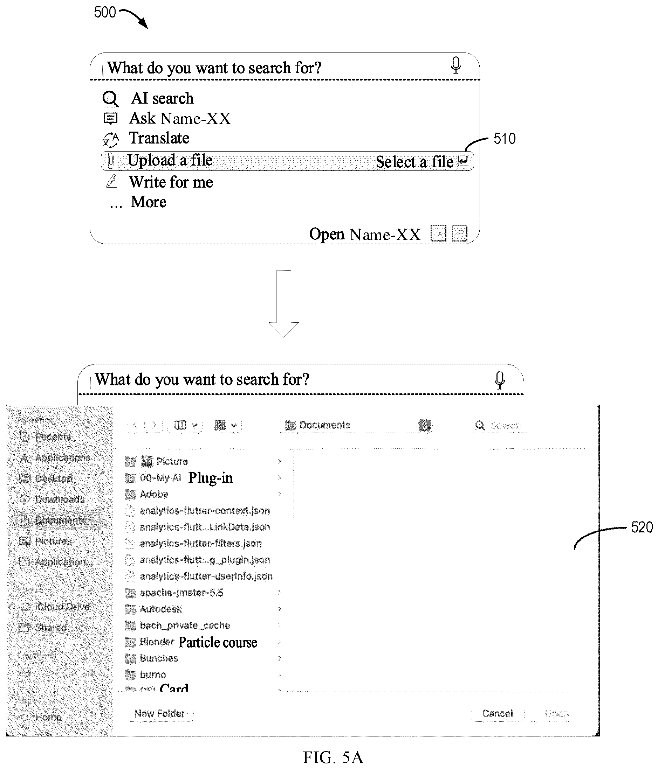

FIG. 5A is a schematic diagram of an interface 500 associated with file upload. For example, the user may click on the first function (i.e., "Upload a file") in the interface 200 shown in FIG. 2, to enter the interface 500 associated with the first function (i.e., "Upload a file").

As shown in the figure, prompt information "Select a file" 510 may be displayed at a location associated with the generative function "Upload a file". For example, when the user selects the generative function by, for example, clicking on "Upload a file", a file selection interface 520 may be displayed, so that the user can select a file from files locally stored on the electronic device.

For example, after the user determines a selected file, an AI-companioned reading interface or an AI question and answer interface may be entered. For example, after the user determines the selected file, the interface of the specific desktop application may be presented, such as an interface of a dedicated browser shown in FIG. 5B or an interface of the Name-XX application shown in FIG. 5C.

For example, as shown in FIG. 5B, the opened file may be displayed in a first area 532 of the interface of the browser, and a loading status of the file and available generative functions may be displayed in a second area 534. For example, as shown in FIG. 5C, the loading status of the file and the available generative functions may be displayed in an area 540 of the interface of the Name-XX application. By way of example, the user may input a question in an input box in the area 534 or the area 540, so that the specific desktop application (such as the dedicated browser or the Name-XX application) generates a desired answer.

Some examples of the present disclosure are described above with reference to FIG. 3A to FIG. 5C. The user may have learned the corresponding generative functions and selected the first function, and accordingly, the launcher may generate the output based on the input of the user by using the first function. It should be understood that operations for generative functions other than those shown in FIG. 3A to FIG. 5C are similar and are not listed one by one here. It should be noted that FIG. 3A to FIG. 5C show only examples of the interface, and in an actual scenario, more or fewer content or controls may be presented in the interface., which is not limited in the present disclosure.

Referring now back to FIG. 2, in some implementations, the user may enter the first input information in the input box 210 of the interface 200 of the launcher, for example, the user does not select a specific generative function. In some implementations, a first output corresponding to the first input information may be generated in response to the first input information from the user in the input box 210.

In some implementations, the first input information from the user in the input box 210 may be obtained, and then user intent may be determined based on the first input information. For example, the corresponding query may be determined based on the user intent, and then the first output may be obtained based on the corresponding query.

In some embodiments, the user intent may represent an interaction scenario desired by the user. By way of example, the interaction scenario desired by the user is performing a local query for a local file or a local application. For example, the user intent is a local search. By way of example, the interaction scenario desired by the user is performing a query using at least one search engine. For example, the user intent is a search on the Internet. By way of example, the interaction scenario desired by the user is performing a large language model query using the specific desktop application associated with the launcher. For example, the user intent is to satisfy a need based on a capability of a large model.

In some implementations, the user intent may be determined based on the first input information from the user. For example, a scenario for the user intent is a local search, a search in a search engine, or satisfaction of a need based on a capability of a large model. In addition, an output corresponding to the scenario may be presented (or preferentially presented) to the user in the scenario for the user intent. For example, if the determined user intent is to satisfy a need based on a capability of a large model, one or more matching generative functions may be further determined based on the first input information, and a corresponding output is obtained by using the determined one or more matching generative functions.

For example, if the determined user intent is the local search, the first output corresponding to the first input information may be found through a query for a local file or a local application. For example, the first output may include a link to a local target file or a local target application. For example, the plurality of generative functions may continue to be displayed during display of the first output, to facilitate a subsequent operation of the user.

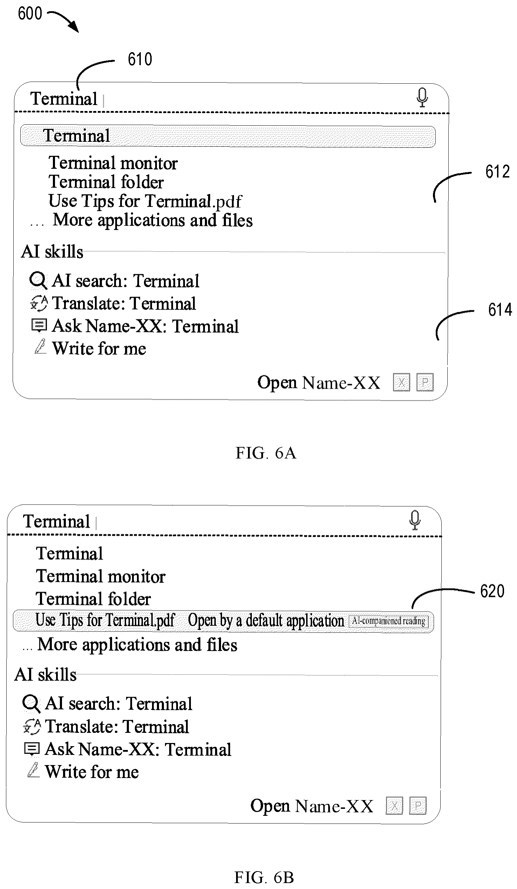

FIG. 6A shows an embodiment of a local search 600. The user may input first input information 610, such as "Terminal", in the input box. As shown in the figure, a local file and/or a local application found through local retrieval may be displayed in a first area 612, and the plurality of generative functions may be further displayed in a second area 614.

The first output displayed in the first area 612 may include a plurality of entries. For example, a predetermined number of entries (such as four) with higher degrees of matching may be displayed, and other entries are collapsed (e.g., "More applications and files"). For example, if the user clicks on "More applications and files", a local file search page of the system may be opened.

It may be understood that the first output may include the local target application. In this way, the user can start the target application through an operation such as a click.

It may be understood that the first output may include the local target file, where the target file may have different formats such as PDF, DOCX, XLSX, PPTX, or CSV. Optionally, the user can open the target file (e.g., in the format thereof) through an operation such as a click. Optionally, an additional mode for opening may be provided for the target file, such as AI-companioned reading or AI question and answer.

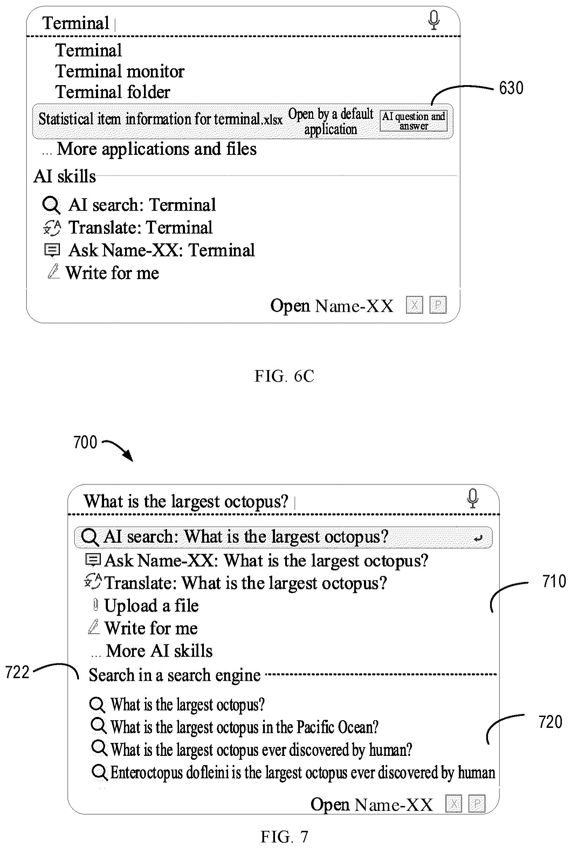

With reference to FIG. 6B, two open modes may be provided for the target file in the PDF format, i.e., "Open by a default application" and "AI-companioned reading" 620. With reference to FIG. 6C, two open modes may be provided for the target file in the XLSX format, i.e., "Open by a default application" and "AI question and answer" 630.

For example, if the determined user intent is to satisfy a need based on a capability of a large model, one or more matching generative functions may be further determined based on the first input information. Then, the first output corresponding to the first input information may be obtained by using the one or more matching generative functions. As an example, assuming that the first input information is " 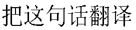 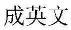 : 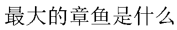 ? ", in this case, the first input information may be parsed, to determine that the user intent is to satisfy a need based on a capability of a large model, and a matching generative function is "Translate", where a target language is English. Accordingly, the first output, that is, a corresponding English translation, may then be displayed in a manner similar to that shown in FIG. 4. As another example, assuming that the first input information is "Provide summary information of a local PDF file named <Use Tips for Terminal>", in this case, the first input information may be parsed, to determine that the user intent is to satisfy a need based on a capability of a large model, and matching generative functions include "Upload a file" and "Summarize a document". Then, the electronic device may obtain, from local files, the target file in the PDF format named <Use Tips for Terminal>, and obtain the first output using a document summary generation function. For example, a summary of the target file may be displayed in an interface similar to that shown in FIG. 5B or FIG. 5C.

For example, if the determined user intent is a search in a search engine, the search engine may be called to determine the first output corresponding to the first input information. As an example, assuming that the first input information is "What is the address and phone number of Restaurant A?", in this case, the first input information may be parsed, to determine that the user intent is a search in a search engine. Accordingly, a search may be performed using the search engine, to obtain the corresponding first output. As an example, the first output may be a web page. Optionally, there may be a jump directly to the search engine, and then the web page may be displayed. Alternatively, a link to the web page may be displayed. As an example, the first output may be content from the web page, such as a corresponding answer.

In some implementations, the first input information from the user in the input box 210 may be obtained, and two or more of the following queries may be simultaneously performed based on the first input information: a local query, a query that uses at least one search engine, or a large language model query that uses the specific desktop application. Further, the first output may be obtained based on a query result.

For example, the first output includes a plurality of entries, e.g., includes, one or more entries based on the local query, one or more entries based on the search engine, and/or one or more entries based on the large language model. In some examples, the plurality of entries may be divided into a plurality of parts: a first part based on the local query, a second part based on the large language model query, and/or a third part based on the query that uses the search engine.

For example, the plurality of entries may be arranged and displayed in order of priority. For example, one or more entries related to the user intent have high priorities. For example, the one or more entries based on the local query have high priorities. For example, at least one entry associated with the application running before the launcher is invoked has a high priority. As an example, the user invokes the interface of the launcher through the wake-up operation when the running interface of JavaScript is displayed, and the first input information from the user relates to a meaning of a while statement. In this case, the display of a meaning, a usage, etc. of the while statement in JavaScript in the first output may be prioritized.

For example, the plurality of entries may be arranged in order based on a location of the query. For example, the first part based on the local query may be displayed in a first area, the second part based on the large language model query may be displayed in a second area, and the third part based on the query that uses the search engine may be displayed in a third area. By way of example, the first area is located above the second area and the third area, and the second area is located above the third area. However, it should be understood that other arrangement manners are applicable, which are not listed here. For example, the numbers of entries presented in the first area, the second area, and the third area may not exceed corresponding thresholds, depending on a size limit of a display area. For example, a same threshold is used for all the areas, such as 4 or 5. For example, different thresholds are used for different areas, such as a threshold 5 for the first area and a threshold 4 for the second area.

Optionally, an area identifier may be displayed at the top of each area. Optionally, an area identifier of the uppermost area may be omitted. Optionally, some or all of the first part, the second part, and the third part may be displayed, depending on the plurality of entries.

FIG. 7 is a schematic diagram of a first output 700. For the first input information "What is the largest octopus?", an area 710 and an area 720 may be displayed, where the second part based on the large language model query is displayed in the area 710, the third part based on the query that uses the search engine is displayed in the area 720, and the area 720 is located below the area 710. As shown the figure, an area identifier 722 of the area 720 is also displayed, e.g., "Search in a search engine". In the example of FIG. 7, as there is no query result of the local query, the first output does not include the first part based on the local query.

For example, for the second part based on the large language model query, the user may select or click on an entry in the second part, to activate the entry. For example, with reference to FIG. 7, the user may select "AI Search: What is the largest octopus?" in the area 710, and then press the enter key, to view an answer, such as an answer shown in FIG. 3B or 3C.

For example, for the third part based on the query that uses the search engine, recommended/suggested information may also be displayed. For example, a hit keyword may be highlighted, and the recommended/suggested information may not be highlighted. For example, with reference to FIG. 7, the recommended or suggested information may include "in the Pacific Ocean", "ever discovered by human ", etc.

As discussed above, in some scenarios, the first output corresponding to the first input information may be generated using the large language model. For example, the first output may include one or more entries obtained using the large language model. Specifically, in response to the user intent being to satisfy a need based on a capability of a large model, the first output may be obtained using the large language model, or the second part based on the large language model query in the first output may be obtained using the large language model.

In some examples, generating the first output based on the large language model may include generating the first output based on retrieval-augmented generation (RAG). For example, when using the specific desktop application (such as Name-XX), the user can build a personal database, for example, referred to as an RAG database of Name-XX. By way of example, the user can build the personal database through favoriting, bookmarking, or other means. By way of example, the personal database may include documents uploaded by the user, and content viewed and then favorited by the user through other channels. It may be understood that the embodiments of the present disclosure impose no limitations on the format, size, attributes, etc., of the content in the personal database. For example, the content may be in the format of text (such as files/documents), multimedia content (such as images/audio/videos), applications, code, and so forth.

For example, the first input information and the content in the personal database can be used as part of input data of the large language model to obtain the first output. By way of example, the input data may include content in the personal database associated with the first input information. For example, the first input information may be prompt information. By way of example, the input data may include background knowledge, etc., learned by the large language model in advance. This can ensure that the obtained first output is more accurate. For example, the first output that is more in line with the user's needs can be obtained.

As an example, learning can be carried out based on RAG to obtain learned content, and subsequently the first output can be obtained using the large language model based on the learned content and the first input information. As another example, the content in the personal database associated with the first input information can be obtained, and subsequently the first output can be obtained through RAG based on the content in the personal database that is associated with the first input information and the first input information. As yet another example, the content in the personal database that is associated with the first input information can be obtained, and subsequently the first output can be obtained based on the first input information. For example, the first output may include some or all of the content in the personal database that is associated with the first input information. For instance, the first output includes part of the content in the personal database that is associated with the first input information, which is in strong association with the first input information.

For example, the personal database includes a sales contract template, and the first input information indicates the need to generate the content of Chapter 8 of the sales contract. In an example, the output may include original text of the content of Chapter 8 of the sales contract template in the personal database. In another example, the original text of the content of Chapter 8 of the sales contract template in the personal database can be revised, e.g., updated based on a sales scenario indicated by the first input information, and the output may include updated content obtained after the original text of the content of Chapter 8 of the sales contract template is revised.

According to example embodiments of the present disclosure, the launcher is associated with the specific desktop application, and can perform AI generation based on the large language model. Additionally, the launcher serves as a search entry for local queries and a search entry for search engines. In this way, the integration of the functions of the launcher and the operating system is achieved, bridging the large language model with the operating system and the search engines, and integrating the entry into the input box of the launcher. This eliminates the need for the user to predetermine the location of a query, which can implement quick and comprehensive interaction with the user, thereby enhancing the user experience.

It should be understood that in the embodiments of the present disclosure, "first", "second", "third", etc. are merely intended to indicate that a plurality of objects may be different, but do not exclude a possibility that two objects are the same, and should not be construed as any limitation on the embodiments of the present disclosure.

It should also be understood that division of manners, cases, types, and embodiments in the embodiments of the present disclosure are only for ease of description, but should not constitute any special limitation, and features in various manners, types, cases, and embodiments may be combined logically.

It should also be understood that the foregoing content is intended only to help those skilled in the art better understand the embodiments of the present disclosure, and is not intended to limit the scope of the embodiments of the present disclosure. Those skilled in the art may make various modifications, changes, combinations, etc. based on the foregoing content. Solutions obtained after such modifications, changes, or combinations also fall within the scope of the embodiments of the present disclosure.

It should also be understood that the descriptions of the foregoing content focus on emphasizing differences between the embodiments, and for same or similar parts, reference may be made to each other. For brevity, details are not described herein again.

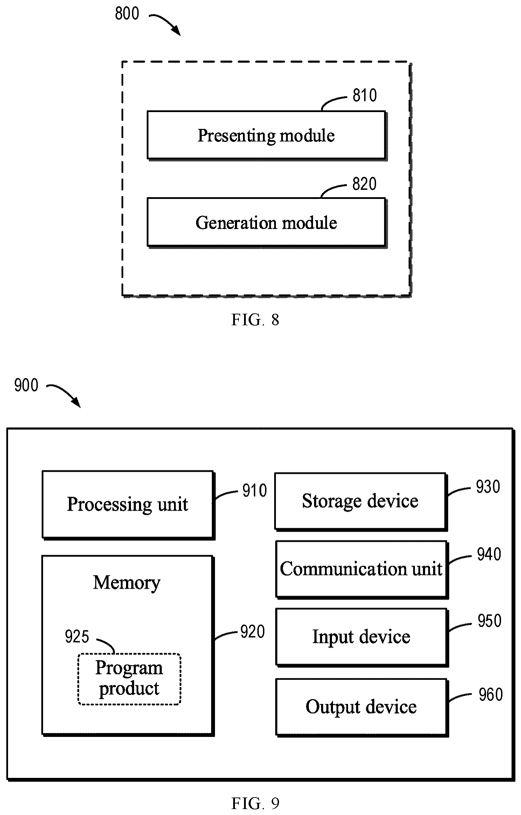

FIG. 8 is a schematic block diagram of an example apparatus 800 according to some embodiments of the present disclosure. The apparatus 800 may be implemented in the form of software, hardware, or a combination of software and hardware. In some embodiments, the apparatus 800 may be implemented as an electronic device. In the embodiments of the present disclosure, the electronic device may be a desktop computer, a tablet computer, etc., which is not limited in the present disclosure.

As shown in FIG. 8, the apparatus 800 includes a presenting module 810 and a generation module 820. The presenting module 810 is configured to: in a case where a desktop or an interface of a running application is displayed, present, in response to a wake-up operation from a user, an interface of a launcher for interacting with the user, where the interface of the launcher includes an input box and a plurality of generative functions. The generation module 820 is configured to generate, based on an input from the user in the input box, an output corresponding to the input.

In some embodiments, the wake-up operation includes any one of the following: the user triggering a shortcut key associated with the launcher, the user inputting voice for invoking the launcher, a specific gesture of the user, or another predefined operation for invoking the launcher. In some embodiments, the interface of the launcher has a predetermined size, and the plurality of generative functions are displayed in a collapsed or scrolling manner based on the predetermined size.

In some embodiments, the running application includes any application running on an operating system of a computer.

For example, the apparatus 800 may further include an obtaining module configured to obtain a trigger operation of the user for a first function among the plurality of generative functions. Further, the presenting module 810 may be configured to present, in response to the trigger operation, an interface associated with the first function, where the interface associated with the first function includes the input box and prompt information associated with the first function. For example, the prompt information is displayed as a placeholder in the input box.

For example, the apparatus 800 may further include an obtaining module configured to obtain first input information from the user in the input box. Further, the generation module 820 is configured to perform a query based on the first input information, to generate a first output corresponding to the first input information, where the query includes at least one of the following: a local query for a local file or a local application in a computer, a large language model query that uses a specific desktop application associated with the launcher, or a query that uses at least one search engine.

In some examples, the apparatus 800 may include a determination module configured to: determine user intent based on the first input information; and determine the corresponding query based on the user intent.

In some examples, the specific desktop application includes a personal database. The generation module 820 is configured to use the first input information and content of the personal database as part of input data of the large language model, to obtain the first output.

In some examples, the first output includes a plurality of entries, and the plurality of entries are arranged in order based on a location of the query.

In some examples, the first output includes a plurality of entries. The plurality of entries include at least one of the following parts: a first part based on the local query; a second part based on the large language model query; and a third part based on the query that uses the at least one search engine.

In some examples, the presenting module 810 is further configured to display the first output by at least one of the following: displaying the first output in the interface of the launcher; or calling the specific desktop application to display the first output in the desktop application. For example, at least one of the following may be further displayed in association with the first output: a copy button, a regenerate button, or a cancel button.

In some examples, the presenting module 810 is configured to prioritize the display of at least one entry in the first output that is associated with the running application.

In some embodiments, the specific desktop application is implemented as at least one of the following: a dedicated browser application, a specific plug-in in the at least one search engine, or a specific web page.

The apparatus 800 in FIG. 8 can be used to implement the method 100 described above with reference to FIG. 1. For brevity, details are not described herein again.

Division into modules or units in the embodiments of the present disclosure is an example and is merely logical function division, and there may be another division manner during actual implementation. In addition, functional units in the embodiments of the present disclosure may be integrated into one unit, each of the units may exist alone physically, or two or more units may be integrated into one unit. The integrated unit may be implemented in the form of hardware, or may be implemented in the form of a software functional unit.

FIG. 9 is a block diagram of an example electronic device 900 that can be used to implement an embodiment of the present disclosure. It should be understood that the device 900 shown in FIG. 9 is merely exemplary and should not constitute any limitation on the functions and scopes of the implementations described herein. For example, the device 900 may be used to perform the method 100 described above.

As shown in FIG. 9, the device 900 is in the form of a general-purpose computing device. Components of the computing device 900 may include but are not limited to one or more processors or processing units 910, a memory 920, a storage device 930, one or more communication units 940, one or more input devices 950, and one or more output devices 960. The processing unit 910 may be a physical or virtual processor, and can perform various processing based on a program stored in the memory 920. In a multi-processor system, a plurality of processing units execute computer-executable instructions in parallel, to improve a parallel processing capability of the computing device 900.

The computing device 900 generally includes a plurality of computer storage media. Such media may be any available media accessible by the computing device 900, including, but not limited to, volatile and non-volatile media and removable and non-removable media. The memory 920 may be a volatile memory (for example, a register, a cache, or a random access memory (RAM)), a non-volatile memory (for example, a read-only memory (ROM), an electrically erasable programmable read-only memory (EEPROM), or a flash memory), or a certain combination thereof. The storage device 930 may be a removable or non-removable medium, may include a machine-readable medium, for example, a flash drive, a disk, or any other medium, and may be configured to store information and/or data (for example, training data for training) and accessed in the computing device 900.

The computing device 900 may further include other removable/non-removable and volatile/non-volatile storage media. Although not shown in FIG. 9, a disk drive for reading from or writing into removable and non-volatile disks (for example, a "floppy disk") and an optical disc drive for reading from or writing into removable and non-volatile optical discs may be provided. In these cases, each drive may be connected to a bus (not shown) through one or more data medium interfaces. The memory 920 may include a computer program product 925 having one or more program modules that are configured to perform various methods or actions in various implementations of the present disclosure.

The communication unit 940 implements communication with another computing device through a communication medium. In addition, functions of the components of the computing device 900 may be implemented by a single computing cluster or a plurality of computing machines, and these computing machines can communicate through a communication connection. Therefore, the computing device 900 may perform operations in a networked environment through a logical connection to one or more other servers, a network personal computer (PC), or another network node.

The input device 950 may be one or more input devices, such as a mouse, a keyboard, and a trackball. The output device 960 may be one or more output devices, such as a display, a speaker, and a printer. The computing device 900 may further communicate, through the communication unit 940 as required, with one or more external devices (not shown), for example, a storage device and a display device, with one or more devices enabling a user to interact with the computing device 900, or with any device (for example, a network interface card or a modem) enabling the computing device 900 to communicate with one or more other computing devices. Such communication may be performed through an input/output (I/O) interface (not shown).

According to an exemplary implementation of the present disclosure, there is provided a computer-readable storage medium, such as a non-transitory computer-readable storage medium, having computer-executable instructions stored thereon. The computer-executable instructions are executed by a processor to implement the method described above. According to an exemplary implementation of the present disclosure, there is further provided a computer program product. The computer program product is tangibly stored on a non-transitory computer-readable medium, and includes computer-executable instructions. The computer-executable instructions are executed by a processor to implement the method described above. According to an exemplary implementation of the present disclosure, there is provided a computer program product having a computer program stored thereon. The program, when executed by a processor, causes the method described above to be implemented.

Various aspects of the present disclosure are described here with reference to the flowcharts and/or the block diagrams of the method, the apparatus, the device, and the computer program product implemented according to the present disclosure. It should be understood that each block of the flowchart and/or the block diagrams and a combination of blocks in the flowchart and/or the block diagrams may be implemented by computer-readable program instructions.

These computer-readable program instructions may be provided to a processing unit of a general-purpose computer, a special-purpose computer, or another programmable data processing apparatus to produce a machine, such that the instructions, when executed by the processing unit of the computer or the other programmable data processing apparatus, create an apparatus for implementing functions/actions specified in one or more blocks in the flowcharts and/or the block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowchart and/or the block diagrams.

The computer-readable program instructions may be loaded onto a computer, another programmable data processing apparatus, or another device, such that a series of operation steps are performed on the computer, the other programmable data processing apparatus, or the other device to produce a computer-implemented process. Therefore, the instructions executed on the computer, the other programmable data processing apparatus, or the other device implement functions/actions specified in one or more blocks in the flowcharts and/or the block diagrams.

The flowcharts and the block diagrams in the accompanying drawings illustrate possible system architectures, functions, and operations of the system, the method, and the computer program product according to a plurality of implementations of the present disclosure. In this regard, each block in the flowcharts or the block diagrams may represent a part of a module, a program segment, or an instruction. The part of the module, the program segment, or the instruction includes one or more executable instructions for implementing a specified logical function. In some alternative implementations, functions marked in the blocks may occur in a sequence different from that marked in the accompanying drawings. For example, two consecutive blocks may actually be executed substantially in parallel, or may sometimes be executed in a reverse order, depending on a function involved. It should also be noted that each block in the block diagrams and/or the flowcharts, and a combination of the blocks in the block diagrams and/or the flowcharts may be implemented by a dedicated hardware-based system that executes specified functions or actions, or may be implemented by a combination of dedicated hardware and computer instructions.

The foregoing has described various implementations of the present disclosure. The foregoing descriptions are exemplary, not exhaustive, and are not limited to the disclosed implementations. Many modifications and variations are apparent to a person of ordinary skill in the art without departing from the scope and spirit of the described implementations. Selection of terms used in this specification is intended to best explain principles of the implementations, actual application, or improvements to technologies in the market, or to enable another person of ordinary skill in the art to understand the implementations disclosed in this specification.

## Claims

1. A computer-implemented method, comprising:
in a case where a desktop or an interface of a running application is displayed, presenting, in response to a wake-up operation from a user, an interface of a launcher for interacting with the user, wherein the interface of the launcher comprises an input box and a plurality of generative functions; and
generating, based on an input from the user in the input box, an output corresponding to the input.

2. The method according to claim 1, wherein the wake-up operation comprises:
the user triggering a shortcut key associated with the launcher,
the user inputting voice for invoking the launcher,
a specific gesture of the user, or
another predefined operation for invoking the launcher.

3. The method according to claim 1, wherein the running application comprises any application running on an operating system of the computer.

4. The method according to claim 1, wherein the interface of the launcher has a predetermined size, and wherein the plurality of generative functions are displayed in a collapsed or scrolling manner based on the predetermined size.

5. The method according to claim 1, further comprising:
obtaining a trigger operation of the user for a first function among the plurality of generative functions; and
presenting, in response to the trigger operation, an interface associated with the first function, wherein the interface associated with the first function comprises the input box and prompt information associated with the first function.

6. The method according to claim 5, wherein the prompt information is displayed as a placeholder in the input box.

7. The method according to claim 1, further comprising:
obtaining first input information from the user in the input box; and
performing a query based on the first input information to generate a first output corresponding to the first input information, wherein the query comprises at least one of the following:
a local query for a local file or a local application in the computer,
a large language model query that uses a specific desktop application associated with the launcher, or
a query that uses at least one search engine.

8. The method according to claim 7, further comprising:
determining user intent based on the first input information; and
determining the corresponding query based on the user intent.

9. The method according to claim 7, wherein the specific desktop application comprises a personal database, and wherein generating the first output comprises:
using the first input information and content of the personal database as part of input data of a large language model to obtain the first output.

10. The method according to claim 7, wherein the first output comprises a plurality of entries, and the plurality of entries are arranged in order based on a location of the query.

11. The method according to claim 7, wherein the first output comprises a plurality of entries, and the plurality of entries comprise at least one of the following parts:
a first part based on the local query;
a second part based on the large language model query; and
a third part based on the query that uses the at least one search engine.

12. The method according to claim 7, further comprising displaying the first output by at least one of the following:
displaying the first output in the interface of the launcher; or
calling the specific desktop application to display the first output in the desktop application.

13. The method according to claim 12, further comprising:
displaying, in association with the first output, at least one of the following: a copy button, a regenerate button, or a cancel button.

14. The method according to claim 7, further comprising:
prioritizing the display of at least one entry in the first output that is associated with the running application.

15. The method according to claim 7, wherein the specific desktop application is implemented as at least one of the following: a dedicated browser application, a specific plug-in in the at least one search engine, or a specific web page.

16. An electronic device, comprising:
at least one processor; and
at least one memory having computer-executable instructions stored thereon, wherein the computer-executable instructions, when executed by the at least one processor, cause the electronic device to implement the method according to any one of claims 1 to 15.

17. A non-transitory computer-readable storage medium having computer-executable instructions stored thereon, wherein the computer-executable instructions, when executed by a processor, implement the method according to any one of claims 1 to 15 to be implemented.

18. A computer program product, comprising computer-executable instructions, wherein the computer-executable instructions, when executed, implement the method according to any one of claims 1 to 15 to be implemented.
